# EUROPEAN PATENT APPLICATION

(11) **EP 4 544 919 A1**
(43) Date of publication of application: **30.04.2025**
(21) Application number: 24464001.7
(22) Date of filing: 14.02.2024
(51) Int. Cl.: A23L 21/15, A23L 29/256, A23L 29/20, A23L 33/105

(54) **JELLY WITH NATURAL ARONIA MELANOCARPA AND LEMON ESSENTIAL OIL AND PROCESS FOR OBTAINING IT**

(30) Priority: 26.10.2023 RO 202310608
(71) Applicant: Stefan cel Mare University of Suceava, 720229 Suceava, County Suceava (RO)
(72) Inventor: Gheorghita, Roxana Elena, Suceava (RO); Oroian, Mircea Adrian, Suceava (RO)

(57) **Abstract**

The invention pertains to a jelly-type product, without preservatives, stabilizers, flavors, and other additives that may diminish the nutritional and biological quality of the final product. According to the invention, the jellies are made from *Aronia melanocarpa* juice and lemon essential oil, gelled with sodium alginate. The processing of the jellies, as per the invention, involves several stages, such as homogenization and pasteurization in a vat, maintaining the temperature at 65°C for 20 minutes, followed by cooling to 40°C. After cooling, lemon peel oil is added, and further homogenization occurs for 10 minutes at a constant temperature. After this step, the jelly-forming solution is poured into predetermined molds for distribution and consumption, previously immersed in a 1 % calcium chloride solution, followed by cooling to the refrigeration and storage temperature (+2...+4°C). The product is intended for all consumer categories and possesses all the attributes to become a favorite among them.

## Description

The invention pertains to a jelly obtained entirely from natural ingredients and the method of obtaining it.

Jellies represent food products whose main ingredient is sugar, usually incorporated in the form of sucrose and/or glucose syrup, combined with gelling agents, acids, flavors, and food colorings. Research in the field has indicated that, due to the high sugar content and food additives, as well as the undesired compounds generated by heat treatment, a high consumption of such products can have negative effects on human health [1]. Despite this fact, jellies are consumed by a large and diverse group of people, ranging from children to the elderly, and are frequently used in the pharmaceutical industry as well.

The use of natural juices or products derived from fruits has been considered for the manufacturing of jellies. Besides enhancing the organoleptic properties (color, flavor, and texture) of the jellies, they can contribute to healthier formulations with improved properties [2].

*In vivo* research has demonstrated that *Aronia melanocarpa* juice, due to its constituents, provides significant health benefits for the consumer. Thus, due to the inhibition of the dipeptidyl peptidase IV enzyme, it exhibits a neuroprotective effect [3]. The high polyphenol content promotes it as a good modulator, with benefits for obesity and type 2 diabetes [4], and the anthocyanins in its composition have a strong antioxidant and cell-protective effect [5]. Other benefits of consumption include strengthening the immune system (due to its high vitamin C content), supporting cardiovascular health, cognition, and memory, as well as exhibiting antibacterial and detoxifying effects.

Due to its high anthocyanin content, it is challenging to consume as is, especially being rejected by children. It is often recommended to dilute it in water or combine it with other fruit juices.

The oil obtained from lemon peels is a valuable byproduct, easily extracted from materials considered waste in the food industry. Lemons are among the most consumed citrus fruits in the industry, and the peels generated in large quantities after juice extraction are rich in high-value substances such as pectin, fibers, essential oils, or flavonoids. These byproducts also possess nutraceutical properties, including antioxidant, antimicrobial, antiobesogenic, antidiabetic, anticolitic, antiarthritic, antiurolithic effects, as well as probiotic or photoprotective effects [6].

This invention, through the combination of aronia juice, oil obtained from lemon peels and sodium alginate as a gelling agent, aims to develop biologically active, functional jellies with health benefits, accepted by the entire consumer category. Additionally, by utilizing byproducts from the food industry, it contributes to circular economy principles. The addition of lemon oil to aronia juice not only enhances antioxidant, anti-inflammatory, or immunostimulatory effects but also increases the acceptability of the product. The use of sodium alginate as a gelling agent, instead of gelatin, promotes the development of a product with a resilient coating and semi-solid filling. This aspect arouses curiosity and interest among consumers, especially due to heightened palatable sensations that occur upon breaking the coating and releasing the contents after ingestion. The present invention addresses current issues related to the stability of products with high anthocyanin and vitamin content. The sodium alginate-based coating maintains the nutritional and biological qualities, which can be extremely labile under other conditions (light, humidity, improper storage, etc.). Additionally, it prevents alterations in appearance, substitutes the use of preservatives or stabilizers, and the resulting product is natural, without the addition of sugar or gelatin, or other substances that could be harmful to health through cumulative effects. These characteristics position the present invention as a natural product suitable for all consumer categories.

The production of a jelly-type product obtained from aronia juice and 0.5% lemon essential oil involves pasteurizing and homogenizing the aronia juice with sodium alginate in vats equipped with controlled homogenization and heating systems. After completing these operations, the mixture is cooled to 40°C, lemon essential oil is added, and homogenization continues for an additional 10 minutes. Once the jelly-forming solution is obtained, it is poured into predetermined packages for distribution and consumption, previously immersed in a calcium chloride solution to facilitate easy release. After production, the jellies are stored under refrigeration conditions (2-4°C).

The application of the invention presents several advantages:
- development ofa product with natural fruit juice, beneficial for consumers' health, which can become the preferred product for children;
- develompent of a completely natural fruit jelly, free from any type of preservative, stabilizer, synthetic coloring, typically added to such products;
- development of a product with sensory, nutritional, and biological properties unaltered due to the protective effect achieved through its gelling;
- development of a product with high content of vitamins C (35% of the Recommended Daily Allowance - RDA), E (8% of RDA), K (17% of RDA), A (7% of RDA), Q, and P, as well as minerals: magnesium (5% of RDA), manganese (32% of RDA), folate (6% of RDA); potassium (3% of RDA), iron (8% of RDA), calcium (5% of RDA), zinc (5% of RDA);
- development of a product that can be used in detoxification regimens, with a role in regulating blood sugar and diabetes, blood pressure, strengthening the immune system, and providing a soothing effect;
- Obtaining a jelly with a functional food role, due to its high content of polyphenols, enzymes, vitamins, and minerals.

We present, in the following, an example of producing the jellies according to the invention.

Thus, to obtain 100 kg of jelly, the following ingredients are required: 95.5 kg of cold-pressed aronia juice, 0.5 kg of lemon peel oil, and 4 kg of sodium alginate. The mixture of aronia juice and sodium alginate is homogenized and pasteurized in a vat by maintaining it for 20 minutes at a temperature of 65°C, followed by cooling to 40°C. After cooling, lemon peel oil is added, and it is further homogenized for 10 minutes at a constant temperature. After this step, the jelly-forming solution is poured into predetermined molds for distribution and consumption, previously immersed in a 1% calcium chloride solution, followed by cooling to the refrigeration and storage temperature (+2...+4°C).

According to the invention, the product is one with high biological value, with an energy value of 46 kcal (194 kJ) per 100 g of the product. It contains 0.1 g of proteins, 13 g of carbohydrates, including 6.8 g of natural sugars, 0.5 g of fats, including 0.1 g of saturated fatty acids, 0.1 g of fibers, and 0.01 g of salt.

The presented invention is easily applicable at an industrial level, do not requires any additional special equipment for production, and can be reproduced with the same characteristics and performance.

### [BIBLIOGRAPHICAL REFERENCES]

[1] Cano-Lamadrid, M.; Calín-Sánchez, Á.; Clemente-Villalba, J.; Hernández, F.; Carbonell-Barrachina, Á.A.; Sendra, E.; Wojdylo, A. Quality Parameters and Consumer Acceptance of Jelly Candies Based on Pomegranate Juice "Mollar de Elche". Foods 2020, 9, 516. https://doi.org/10.3390/foods9040516.
[2] Teixeira-Lemos, Edite, Almeida, Ana Rita, Vouga, Beatriz, Morais, Cátia, Correia, Inês, Pereira, Pedro and Guiné, Raquel P. F. Development and characterization of healthy gummy jellies containing natural fruits. Open Agriculture, 6(1), 2021, pp. 466-478. https://doi.org/10.1515/opag-2021-0029.
[3] Takuya Yamane, Momoko Imai, Satoshi Handa, Hideo Ihara, Tatsuji Sakamoto, Tetsuo Ishida, Takenori Nakagaki, Susumu Uchiyama. Aronia juice improves working memory and suppresses δ-secretase activity in 5XFAD mice. NFS Journal, 32, 100146, 2023. https://doi.org/10.1016/j.nfs.2023.100146.
[4] Momoko Imai, Takuya Yamane, Miyuki Kozuka, Shigeo Takenaka, Tatsuji Sakamoto, Tetsuo Ishida, Takenori Nakagaki, Yoshihisa Nakano, Hiroshi Inui. Caffeoylquinic acids from aronia juice inhibit both dipeptidyl peptidase IV and α-glucosidase activities. LWT, 129, 109544, 2020. https://doi.org/10.1016/j.lwt.2020.109544.
[5] Bakuradze, T.; Meiser, P.; Galan, J.; Richling, E. DNA Protection by an Aronia Juice-Based Food Supplement. Antioxidants, 10, 857, 2021. https://doi.org/103390/antiox10060857.
[6] Haitao Jiang, Wanli Zhang, Yan Xu, Luyao Chen, Jiankang Cao, Weibo Jiang. An advance on nutritional profile, phytochemical profile, nutraceutical properties, and potential industrial applications of lemon peels: A comprehensive review. Trends in Food Science & Technology, 124, 219-236, 2022. https://doi.org/10.1016/j.tifs.2022.04.01.

## Claims

1. Jelly with Aronia juice and lemon essential oil, **characterized by** the fact that, for 100 kg of the finished product, the following raw materials are required: 95.5 kg of cold-pressed Aronia juice, 0.5 kg of lemon peel oil, and 4 kg of sodium alginate.

2. Method for obtaining jelly with Aronia juice and lemon essential oil, **characterized by** preparing a mixture from the quantities of ingredients presented in claim 1, which is homogenized and pasteurized in a vat by maintaining it for 20 minutes at a temperature of 65°C, followed by cooling to 40°C. After cooling, lemon essential oil is added, and it is further homogenized for 10 minutes at a constant temperature. After this step, the jelly-forming solution is poured into predetermined molds for distribution and consumption, previously immersed in a 1% calcium chloride solution, followed by cooling to the refrigeration and storage temperature (+2...+4°C). The product is one with high biological value, with an energy value of 46 kcal (194 kJ) per 100 g of the product, 0.1 g of proteins, 13 g of carbohydrates, of which 6.8 g are natural sugars, 0.5 g of fats, including 0.1 g of saturated fatty acids, 0.1 g of fibers, and 0.01 g of salt.
